# EUROPEAN PATENT SPECIFICATION

(11) **EP 1 163 756 B1**
(45) Date of publication and mention of the grant of the patent: **13.12.2006**
(21) Application number: 00921194.7
(22) Date of filing: 25.02.2000
(51) Int. Cl.: H04L 9/32, G06Q 20/00, G07F 7/08

(54) **METHOD AND SYSTEM FOR ELECTRONIC COMMERCE**
VERFAHREN UND VORRICHTUNG ZUM ELEKTRONISCHEN GESCHÄFTSVERKEHR
PROCEDE ET SYSTEME DE COMMERCE ELECTRONIQUE

(30) Priority: 19.03.1999 SE 9901005
(43) Date of publication of application: 19.12.2001
(73) Proprietor: TELEFONAKTIEBOLAGET LM ERICSSON (publ), 164 83 Stockholm (SE)
(72) Inventor: SKOG, Bengt, Robert, S-165 76 Hässelby (SE); PEHRSON, Staffan, S-182 39 Danderyd (SE)
(74) Representative: Norin, Klas
(86) International application number: PCT/SE2000/000375
(87) International publication number: WO 2000/057596

(56) References cited:
- EP-A1- 0 785 534
- EP-A2- 0 708 547
- WO-A1-94/11849
- WO-A1-96/25828
- WO-A1-98/34203
- WO-A1-98/37663

## Description

### Technical field

The present invention relates to a system and a method of identifying a subscriber in electronic commerce through a data network. The method and the system are in particular concerned with a data network with connection to a mobile radio network.

### The state of the art

In electronic commerce, i.e. commerce where economic transactions are carried out between parties via a data network, it is important that the identity of whoever carries out the transaction can be secured.

A published patent application WO94/11849 tackles the problem of a user, who, from his or her telephone wants to use e.g. a bank service, has to give a code to get access to the service. A solution to the problem is presented through which it becomes possible for a user of a mobile station to be able to utilize the bank service without giving a code. The solution consists of the bank service being realized in an application, which can be reached from an internal telephone network. An entry to the internal telephone network is available for mobile stations included in a GSM network. To activate an included mobile station, it is required that its subscriber gives a code. Setup of a connection to the bank service takes place upon the request of a certain mobile station with an A-number. The A-number is available to the bank service at the setup. The bank service checks if the A-number is registered for a customer, and if so, the bank service is permitted to be utilized through the connection.

EP-A-0708547 discloses a solution for a customer to obtain credit with his/her wireless service provider for the purchase of goods and services from a merchant. In one embodiment, the customer receives a unique code from the merchant, and then the terminal 10 sends that code embedded in a complicated string to its base station. The base station then recognizes that the message is an attempt to reach the a credit center 40 and conveys relevant information thereto. In another embodiment, the merchant contacts the credit center 40. The communications between the customer and the merchant and between the merchant and the credit center, respectively, are linked by using a selected transaction password (TP string) that the customer sends to the base station and the merchant also sends to the credit center.

WO-A-98/34203 discloses a solution for performing financial transactions using a mobile terminal. Financial identification codes are stored in the mobile terminal, the codes representing credit or debit accounts, digital money or other financial entities. The codes are transmitted over the air to a merchant to enable efficient purchase transactions.

### Description of the invention

A problem with the previously known art is that the subscriber, to be able to carry out a purchase, must establish a relation with the seller in advance for the latter to agree to the purchase.

Thus, an object of the present invention is to make purchases possible through a data network via a mobile terminal, where the identity of the buyer can be secured by means of functions in the mobile radio network in which the terminal is included. The invention is based on the observation that the identity of the buyer can be determined if he/she has a subscription in a mobile radio network for his/her mobile terminal.

This object can be obtained by the present invention as defined in the following independent claims. According to different aspects of the present invention, a method, a system and an access database are provided, for identifying a subscriber requesting a piece of merchandise or service offered by means of an application in a serving computer connected to a packet data network. Means for running an application is also provided for use in a serving computer connected to a packet data network, said application offering a piece of merchandise or service to a requesting subscriber. In the above aspects of the present invention, the subscriber has a subscription in a mobile radio network and uses a mobile terminal for access to the packet data network via the mobile radio network, and a subscriber database contains subscriber information connected to the identity of the mobile terminal.
In the inventive method, a temporary IP-address is assigned to the mobile terminal and registering the identity of the mobile terminal together with said temporary IP-address in an access database. The mobile terminal sends said temporary IP-address to the application together with the subscriber's merchandise or service request in a session between the mobile terminal and the application. The subscriber is then identified by using said temporary IP-address given by the application to obtain the identity of the mobile terminal from the access database.

The inventive system comprises an access database adapted to register the identity of the mobile terminal together with a temporary IP-address assigned to the mobile terminal. The system further comprises means in said application for receiving said temporary IP-address together with the subscriber's merchandise or service request in a session with the mobile terminal. The system further comprises means for identifying the subscriber by using said temporary IP-address given by the application to obtain the identity of the mobile terminal from the access database.

The inventive access database is adapted to register the identity of the mobile terminal together with a temporary IP-address assigned to the mobile terminal, and to provide the identity of the mobile terminal to said application in response to an inquiry from the application referring to said temporary IP-address as received by said application together with the subscriber's merchandise or service request in a session with the mobile terminal.

The inventive application running means is adapted to receive a temporary IP-address, assigned to the mobile terminal, together with the subscriber's merchandise or service request in a session with the mobile terminal. The application running means is further adapted to obtain the identity of the mobile terminal from an access database by referring to said temporary IP-address, wherein the access database has registered the identity of the mobile terminal together with said temporary IP-address.

One advantage of the present invention is that a user of a mobile terminal, via the same can make purchases via a number of applications (AP1-AP3) without having created a relationship in advance with whoever provides a service realized by the application. The only thing required is that a relationship is maintained between the operator of the mobile radio network and the provider of the service.

A further advantage is that the risk of frauds in the commerce is greatly reduced. The mobile radio network has powerful functions for securing the terminal identity.

The terminal identity is used through the internal packet data network to identify the buyer. Since only mobile terminals have the possibility of connecting to the packet data network, their identities cannot be manipulated. Also credit card numbers that are sent through the packet data network are protected against unauthorized reading since only one operator controls this network and therefore can give a guarantee against reading.

To realize the system according to the invention is cheap since the substantial functions for securing the identity of the subscriber/buyer are already realized in the mobile radio network. By giving the operator of the mobile radio network the control over the internal packet data network as well, an ordinary, rather cheap packet data network can be used.

Today's mobile radio networks have a large number of subscribers, and therefore a system according to the invention has already from the start a large amount of potential customers.

The invention will now be described closer with the aid of preferred embodiments and with reference to the attached drawing.

### Description of the figures

Figure 1 is a view of nodes in a system according to the invention.
Figure 2 is a view of nodes in an alternative system according to the invention.

### Preferred embodiments

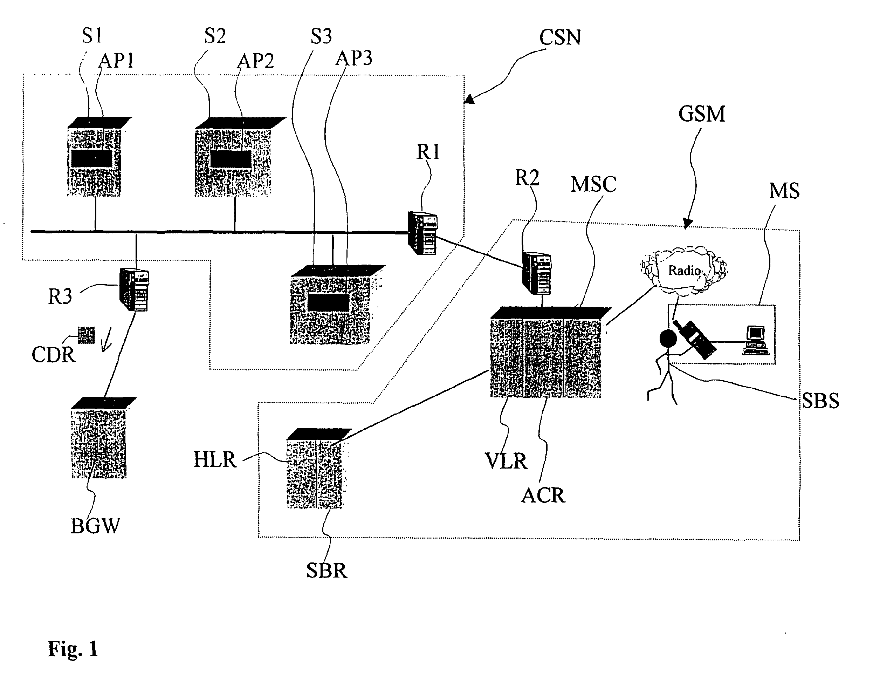

Figure 1 shows a system for electronic commerce. The system comprises a GSM-network GSM and an internal packet data network CSN, which constitutes an electronic market. The packet data network CSN in Figure 1 comprises three serving computers S1-S3, a router R1 and links therebetween. In each of the serving computers S1-S3 there is an application AP1-AP3 for sales of merchandise. The pieces of merchandise are offered by a service provider SP which also takes care of the application AP1-AP3.

The GSM-network GSM connects to the packet data network CSN by means of a second router R2 to the first router R1 of the packet data network CSN. The GSM-network GSM also comprises a switchboard MSC with connections to the second router R2, to a Home Location Register HLR and via radio to at least one mobile terminal MS. In this example, the mobile terminal MS comprises a traditional mobile station and a personal computer with a connection therebetween.

Apart from the packet data network CSN and the GSM-network GSM, the system also comprises a charging database BGW, which connects to the internal packet data network CSN via a third router R3. The charging database BGW, the GSM-network GSM and the packet data network CSN, besides the applications AP1-AP3, are controlled by an operator.

The applications AP1-AP3 offers sales by means of hypertext pages. The mobile terminal MS is provided with a www-browser.

The mobile terminal MS belongs to and is used by a subscriber SBS. In the terminal MS, there is a SIM-card, i.e. a subscriber identity module, to which a subscription in the GSM-network GSM corresponds and which states the identity of the terminal MS.

To activate (idle-mode) the terminal MS, it is required that the subscriber SBS gives a PIN-code. When this is done, signalling with the GSM-network GSM commences to register that the terminal MS is active and where it is located. At the signalling, the identity of the terminal MS is sent in encrypted form through the radio link.

When the terminal MS is registered, a connection to the router R2 of the GSM-network GSM is set up on the request of the subscriber SBS. The terminal MS is assigned a temporary IP-address, which is registered in an access database ACR in connection with the switchboard MSC. By means of the www-browser of the terminal MS, the subscriber SBS then requests a hypertext page from a first application out of the applications AP1. In this example the application AP1 is owned by a service provider which is a travel agency and which offers travel arrangements for sale, through the application AP1. Information on and prices of the travel arrangements are available on the hypertext page which is presented to the subscriber SBS. The subscriber SBS buys one of the travel arrangements by using a hypertext link, which sends information back to the first application AP1. Information, which the subscriber SBS actively supplies by pressing a button or filling a text entry window on the hypertext page, states that a certain travel arrangement is desired to be purchased for a fixed price. No information about who buys the travel arrangement is stated. The information is sent to the first application AP1 together with the temporary IP-address of the terminal MS.

When the first application AP1 has received information from the subscriber SBS that a certain purchase is desired, the application AP1 sends a charging entry CDR to the charging database BGW. The charging entry CDR comprises merchandise identity, price, time information and the temporary IP-address and is registered in the charging database BGW.

In the access database ACR in connection with the switchboard MSC, an entry is registered at the setup to the packet data network CSN, which entry comprises temporary IP-address, terminal identity and the point of time for use of the temporary IP-address.

In connection with the GSM-network there is a subscriber database SBR containing name and address of every subscriber in the GSM-network. The subscriber database SBR can be separate or constitute a part of an existing node in the GSM-network. In the continued presentation it is assumed that the subscriber database SBR is integrated in a home location register HLR.

The operator regularly runs the information in the charging database BGW, the access database ACR and the subscriber database SBR together, to connect the charging entry CDR in the charging database BGW with a certain subscription and to identify the buyer. From the access database ACR the identity of the terminal is obtained in the form of IMSI or MSISDN and with reference to any of these terminal identities, the name and charging address of the subscriber SBS is obtained from the subscriber database SBR. Name and address are reported to the service provider, in this case the travel agency, which thereafter sends tickets to the address registered with the operator.

The subscriber SBS is charged by the operator with the invoice for the subscription of the GSM-network. The operator pays the travel agency for the purchase of the travel arrangement.

The advantage of the above described method is that the identity of the buyer/subscriber SBS can be secured thanks to the identity checks that already are built-in in the GSM-network.

The operator controls the internal packet data network CSN and allows mobile terminals MS in the GSM-network only, to connect to the packet data network CSN. The reason for this is to make manipulation of temporary IP-addresses, which are reported to a receiving application AP1-AP3. more difficult. The applications AP1-AP3 are controlled by the respective service provider. However, the boundary for the applications AP1-AP3 against the packet data network CSN is controlled by the operator in order to prevent manipulation of data. At activation of the terminal MS. the visit database VLR of the switchboard MSC obtains subscriber data from the home location register HLR. According to a advantageous embodiment, these subscriber data are provided with information on whether or not it is permitted for the terminal MS to use the applications AP1-AP3 in the packet data network CSN. If it is not permitted, the switchboard MSC prevents a setup of a connection with the router R2 of the GSM-network. Thereby, use of the applications AP1-AP3 is prevented.

In a GSM-network with many switchboards MSC, preferably only one of the switchboards MSC is connected to the second router R2 for connection to the packet data network CSN. Only the switchboard MSC with connection to the router R2 is provided with the access database ACR.

Alternatively to, as has been described above, running the information in the charging database BGW and the access database ACR together afterwards, in order to find IMSI or MSISDN corresponding to a certain temporary IP-address, the first application AP1 makes a direct inquiry to the access database ACR. By referring to the temporary IP-address, the first application AP1 is informed about the identity of the mobile station in the form of IMSI or MSISDN. When the application AP1 thereafter registers the purchase in the charging node BGW, the identity of the terminal MS is also registered in the form of IMSI or MSISDN. The name and address of the subscriber SBS is thereafter read from the subscriber database SBR.

Alternatively to the architecture shown in Figure 1, the GSM-network GSM can be formed to support a GPRS-service (General Packet Data Service). GPRS is a service for delivery of packet data. According to GPRS the terminal has a fixed IP-address. The subscriber database SBR is modified so that subscriber data can be found with reference to the IP-address of the terminal (MS).

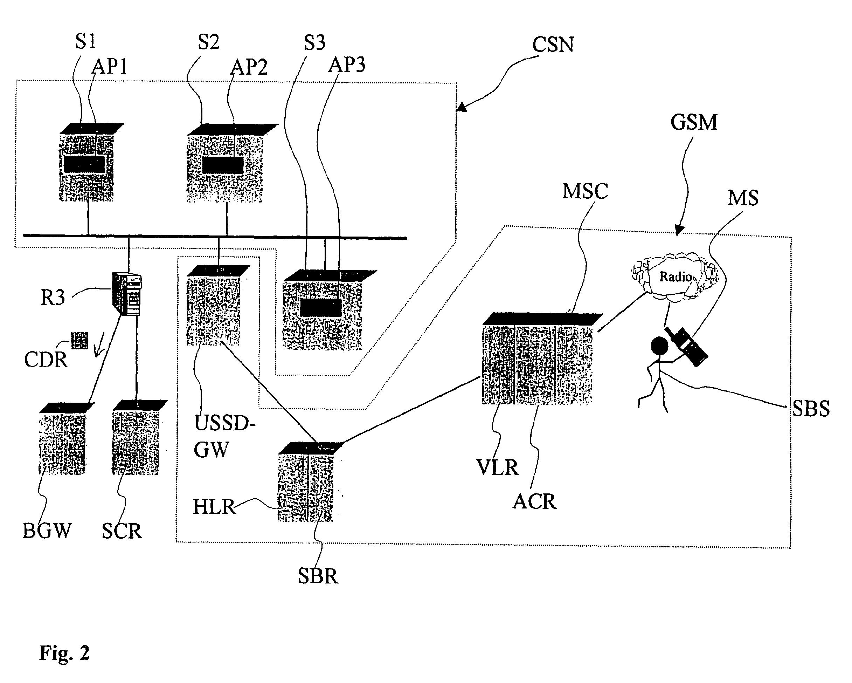

In Figure 2, the nodes in an alternative system for electronic commerce are shown. As well as the system in Figure 1, this system comprises an internal packet data network CSN, a GSM-network GSM as well as a charging node BGW. A difference compared to the system in Figure 1 is that information between the terminal MS and the application AP1 within the GSM-network is delivered by a USSD-service (Unstructured Supplementary Service Data). Thereby the terminal MS does not need to be equipped with a www-browser. Data from the terminal is sent with/by the USSD-service via the switchboard MSC, the home location register HLR to a USSD Gateway USSD-GW which connects to the packet data network CSN. In the USSD Gateway USSD-GW the data is transformed to fit an internet protocol and is transferred via links in the packet data network to the receiving first application. Data transmission from the first application AP1 to the terminal MS runs in the opposite direction through the same nodes. In each data packet which is transferred by USSD and internet protocol to the first application AP1, its address is stated, as well as the identity and the return address of the terminal MS. The identity of the terminal is stated by its MSISDN (Mobile Station ISDN number) or its IMSI (International Mobile Subscriber Identity).

A further difference in Figure 2 compared to Figure 1 is that a second subscriber database SCR connects to the packet data network CSN via the third router R3 which however lies outside the scope of the present invention. In the second subscriber database SCR, there are entries registered for all subscribers with name and address. A subscriber entry is found with reference to IMSI or MSISDN. The travel agency with the first application AP1 sends an inquiry to the subscriber database SCR and receives thereafter information about the name and address of the buyer SBS. This information is later used for the delivery. As an alternative, with the aid of the name and address, the travel agency itself charges the buyer SBS, instead of letting the operator handle it through the telephone invoice.

The second subscriber database SCR can also be used in Figure 1, for the application to be able to find the identity of the buyer SBS, with the aid of the former, provided that the GPRS-service and thereby fixed IP-addresses are used. The subscriber database SCR is in that case arranged so that subscriber entries will be found with the aid of the corresponding IP-address.

As an alternative to charging via the charging database BGW of the operator, an account number at a credit card company is used for charging the buyer/subscriber SBS. In the home location register HLR, an account number has been registered in advance, which the subscriber has the right to use. When the subscriber in this case requests to buy the travel arrangement, he states his credit card number as well as an address to which tickets are to be delivered. The application thereafter sends an inquiry via the USSD Gateway to the HLR whether or not the stated account number may be used from the terminal MS. The identity of the terminal MS is stated in the inquiry. If the stated credit card number corresponds to the earlier registered one in the home location register HLR, a confirmation is sent back to the application AP1 that the credit card number can be used. The tickets are thereafter delivered to the stated address. The buyer/subscriber SBS is thereafter charged in a previously known manner via a credit card company, which has issued the credit card number.

The registration of the credit card number in the home location register HLR is made by the operator after the credit card company and the subscriber have approved to this being done.

A further solution is intended for use when the buyer SBS and a seller physically meet and agree upon a purchase, which however lies outside the scope of the present invention. Instead of paying the seller cash, the buyer connects to a second application AP2 from his/her mobile terminal MS. The second application AP2 offers a payment service. By order of the second application AP2, the purchase is registered in the charging database BGW in a manner described above. The buyer will later be charged and the seller paid in a similar manner to that of a credit card purchase. In order for the seller to deliver the merchandise, the buyer has to show a receipt showing that the purchase has been registered. The receipt is generated and its correctness is checked by the seller according to the following.

From the terminal MS, merchandise, price and seller are sent to the second application AP2. The application AP2 sends these data as well as point of time and terminal identity to the charging node BGW for registration. The application AP2 also generates a receipt code by using a certain algorithm on any or some pieces of information chosen out of the registered pieces of information. The receipt code is sent back to the terminal MS.

The seller also has access to the algorithm and knowledge about which information it is to act upon. The seller also derives a code in the same manner as the application AP2. Preferably, the seller uses a computer for this.

The receipt code obtained in the terminal MS is shown to the seller, and if it corresponds to the code which has been derived at the seller, he/she knows that the purchase has been registered for later payment. The seller thereafter delivers the merchandise.

The receipt code is presented by the terminal, for example with bar code. The bar code is read by the seller via a bar code reader and is transferred to the seller's computer for comparison with the code generated at the seller.

In the embodiment described in connection with Figure 1 above, a www-browser in the terminal MS is used for ordering the merchandise, and the purchase is registered in a charging node BGW. Of course, a credit card may instead be used for charging, as well as the embodiment described in connection with Figure 2. Likewise, the system shown in Figure 2 can have a charging node BGW with the same function as the one described in connection with Figure 1.

For lack of a better word, merchandise if here used for all types of merchandise which are obtained in exchange for payment, also services.

The invention is, of course, not limited to the embodiments described above and shown in the drawing, but can be modified within the scope of the attached claims.

## Claims

1. A method of identifying a subscriber (SBS) requesting a piece of merchandise or service offered by means of an application (AP1) in a serving computer (S1) connected to a packet data network (CSN),
wherein the subscriber has a subscription in a mobile radio network (GSM) and uses a mobile terminal (MS) for access to the packet data network (CSN) via the mobile radio network (GSM), and a subscriber database (HLR,SCR, SBR) contains subscriber information connected to the identity of the mobile terminal (MS),
said method comprising the following steps:
assigning a temporary IP-address to the mobile terminal (MS) and registering the identity of the mobile terminal together with said temporary IP-address in an access database (ACR),
the mobile terminal (MS) sending said temporary IP-address to the application (AP1) together with the subscriber's (SBS) merchandise or service request in a session between the mobile terminal and the application (AP1), and
identifying the subscriber by using said temporary IP-address given by the application (AP1) to obtain the identity of the mobile terminal from the access database (ACR).

2. A method according to claim 1, wherein said subscriber information is obtained from the subscriber database (HLR,SCR,SBR).

3. A method according to claim 1 or 2, wherein the obtained identity of the mobile terminal is used for charging the subscriber (SBS).

4. A method according to claim 3, wherein the application (AP1) sends a charging entry (CDR), containing said temporary IP-address and information about the requested merchandise or service, to a charging database (BGW), and said charging entry (CDR) is used by an operator of said mobile radio system (GSM) to charge the subscriber (SBS) and pay a seller of said merchandise or service.

5. A method according to claim 1, wherein the application (AP1) makes a direct inquiry to the access database (ACR), referring to said temporary IP-address, and is informed about the identity of the mobile terminal (MS).

6. A method according to claim 3, wherein a first credit card number has been registered in said subscriber database (HLR,SCR,SBR), and the subscriber (SBS) gives a second credit card number to said application (AP1), after which, with reference to said identity, said first credit card number from said subscriber database (HLR,SCR, SBR) is read, upon request of said application, whereby the purchase is carried out upon correspondence between the first and the second credit card numbers.

7. A method according to any of the preceding claims, wherein said mobile terminal (MS) is provided with a www-browser, and information between the mobile terminal (MS) and said application (AP1) is transferred in accordance with an internet protocol.

8. A method according to any of claims 1-4. wherein the subscriber (SBS) requests said connection by sending a USSD-message via said subscriber database (HLR) to said application (AP1).

9. A method according to claim 1, wherein the identity of the mobile station is fetched from the access database (ACR) in the form of IMSI or MSISDN by reference to said temporary IP-address for the mobile terminal at the purchase, and information about the subscriber's name and address is fetched from the subscriber database (HLR,SCR. SBR) by reference to said IMSI or MSISDN.

10. A method according to claim 1, wherein the identity of the mobile terminal (MS) is IMSI or MSISDN.

11. A system, for use in a packet data network (CSN) and a mobile radio network (GSM), for identifying a subscriber (SBS) requesting a piece of merchandise or service offered by means of an application (AP1) in a serving computer (S1) connected to said packet data network (CSN),
wherein the subscriber has a subscription in said mobile radio network (GSM) and uses a mobile terminal (MS) for access to the packet data network (CSN) via the mobile radio network (GSM), and a subscriber database (HLR,SCR. SBR) contains subscriber information connected to the identity of the mobile terminal (MS),
said system comprising:
an access database (ACR) adapted to register the identity of the mobile terminal (MS) together with a temporary IP-address assigned to the mobile terminal (MS),
means in said application (AP1) for receiving said temporary IP-address together with the subscriber's (SBS) merchandise or service request in a session with the mobile terminal (MS), and
means for identifying the subscriber by using said temporary IP-address given by the application (AP1) to obtain the identity of the mobile terminal from the access database (ACR).

12. A system according to claim 11, further comprising means for obtaining said subscriber information from the subscriber database (HLR,SCR, SBR) using the identity of the mobile terminal.

13. A system according to claim 11. further comprising a charging database (BGW), connected to the packet data network (CSN), and with means for, upon order from said application (AP1), registering an entry with the amount for payment and the identity of the mobile terminal, for charging said subscriber (SBS).

14. A system according to claim 11. wherein said subscriber database (HLR,SCR, SBR) comprises a first credit card number, which corresponds to the identity of the mobile terminal, and whereby the mobile radio network (GSM) also comprises means for, upon inquiry from said application (AP1-AP3), giving the identity of the mobile terminal, reading a second credit card number and delivering an answer depending on the correspondence between said first and second credit card numbers.

15. A system according to any of claims 11-14, wherein the radio mobile network (GSM) connects to the packet data network (CSN) via a USSD Gateway (USSD-GW), and information between said application (AP1) and said mobile terminal (MS) is transferred by the service USSD.

16. An access database (ACR) for use for identifying a subscriber (SBS) requesting a piece of merchandise or service offered by means of an application (AP1) in a serving computer (S1) connected to a packet data network (CSN),
wherein the subscriber has a subscription in a mobile radio network (GSM) and uses a mobile terminal (MS) for access to the packet data network (CSN) via the mobile radio network (GSM), and a subscriber database (HLR,SCR, SBR) contains subscriber information connected to the identity of the mobile terminal (MS),
said access database (ACR) being adapted to register the identity of the mobile terminal (MS) together with a temporary IP-address assigned to the mobile terminal (MS), and
to provide the identity of the mobile terminal (MS) to said application in response to an inquiry from the application referring to said temporary IP-address as received by said application (AP1) together with the subscriber's (SBS) merchandise or service request in a session with the mobile terminal (MS).

17. An access database (ACR) according to claim 16, wherein the access database (ACR) is adapted to provide the identity of the mobile terminal (MS) as the application (AP1) makes a direct inquiry to the access database (ACR), referring to said temporary IP-address.

18. An access database (ACR) according to claim 16 or 17. wherein the identity of the mobile terminal (MS) is IMSI or MSISDN.

19. Means for running an application (AP1) for use in a serving computer (S1) connected to a packet data network (CSN), said application offering a piece of merchandise or service to a requesting subscriber (SBS),
wherein the subscriber has a subscription in a mobile radio network (GSM) and uses a mobile terminal (MS) for access to the packet data network (CSN) via the mobile radio network (GSM), and a subscriber database (HLR,SCR, SBR) contains subscriber information connected to the identity of the mobile terminal (MS),
said application running means being adapted to receive a temporary IP-address, assigned to the mobile terminal (MS), together with the subscriber's (SBS) merchandise or service request in a session with the mobile terminal (MS), and
to obtain the identity of the mobile terminal (MS) from an access database (ACR) by referring to said temporary IP-address, wherein the access database (ACR) has registered the identity of the mobile terminal together with said temporary IP-address.

20. Means for running an application (AP1) according to claim 19, said application running means being further adapted to make a direct inquiry to the access database (ACR), referring to said temporary IP-address.

21. Means for running an application (AP1) according to claim 19 or 20. said application running means being further adapted to send a charging entry (CDR), containing said temporary IP-address and information about the requested merchandise or service, to a charging database (BGW).

22. Means for running an application (AP1) according to any of claims 19-21, wherein the identity of the mobile terminal (MS) is IMSI or MSISDN.

## Patentansprüche

1. Verfahren zum Identifizieren eines Teilnehmers (SBS), der ein Warenstück oder einen Dienst anfordert, die mittels einer Anwendung (AP1) in einem bedienenden Computer (S1) angeboten werden, der mit einem Paketdatennetzwerk (CSN) verbunden ist,
wobei der Teilnehmer eine Subskription in einem mobilen Funknetzwerk (GSM) besitzt und ein mobiles Endgerät (MS) zum Zugriff auf das Paketdatennetzwerk (CSN) über das mobile Funknetzwerk (GSM) verwendet und eine Teilnehmerdatenbank (HLR, SCR, SBR) Teilnehmerinformation umfasst, die mit der Identität des mobilen Endgerätes (MS) verbunden ist,
wobei das Verfahren die folgenden Schritte umfasst:
Zuweisen einer temporären IP-Adresse an das mobile Endgerät (MS) und Registrieren der Identität des mobilen Endgerätes zusammen mit der temporären IP-Adresse in einer Zugriffsdatenbank (ACR),
Senden der temporären IP-Adresse von dem mobilen Endgerät (MS) an die Anwendung (AP1) zusammen mit der Waren- oder Dienstanforderung des Teilnehmers (SBS) in einer Sitzung zwischen dem mobilen Endgerät und der Anwendung (AP1) sendet, und
Identifizieren des Teilnehmers durch Verwenden der temporären IP-Adresse, die durch die Anwendung (AP1) gegeben ist, um die Identität des mobilen Endgerätes von der Zugriffsdatenbank (ACR) zu erhalten.

2. Verfahren nach Anspruch 1, wobei die Teilnehmerinformation von der Teilnehmerdatenbank (HLR, SCR, SBR) erhalten wird.

3. Verfahren nach Anspruch 1 oder 2, wobei die erhaltene Identität des mobilen Endgerätes verwendet wird, um dem Teilnehmer (SBS) eine Rechnung zu stellen.

4. Verfahren nach Anspruch 3, wobei die Anwendung (AP1) einen Rechnungseintrag (CDR), der die temporäre IP-Adresse und Informationen über die angeforderte Ware oder den Dienst umfasst, an eine Rechnungsdatenbank (BGW) sendet und der Rechnungseintrag (CDR) durch einen Betreiber des mobilen Funksystems (GSM) verwendet wird, um dem Teilnehmer (SBS) eine Rechnung zu stellen und den Verkäufer der Ware oder den Dienst zu bezahlen.

5. Verfahren nach Anspruch 1, wobei die Anwendung (AP1) eine direkte Anfrage an die Zugriffsdatenbank (ACR) richtet, die sich auf die temporäre IP-Adresse bezieht, und über die Identität des mobilen Endgerätes (MS) informiert wird.

6. Verfahren nach Anspruch 3, wobei eine erste Kreditkartennummer in der Teilnehmerdatenbank (HLR, SCR, SBR) registriert wurde und der Teilnehmer (SBS) eine zweite Kreditkartennummer an die Anwendung (AP1) gibt, danach mit Bezug auf die Identität auf Anfrage der Anwendung die erste Kreditkartennummer von der Teilnehmerdatenbank (HLR, SCR, SBR) gelesen wird, wobei der Kauf bei Entsprechung der ersten und der zweiten Kreditkartennummer ausgeführt wird.

7. Verfahren nach einem der vorhergehenden Ansprüche, wobei das mobile Endgerät (MS) mit einem www-Browser bereitgestellt wird und Information zwischen dem mobilen Endgerät (MS) und der Anwendung (AP1) in Übereinstimmung mit einem Internetprotokoll übertragen wird.

8. Verfahren nach einem der Ansprüche 1-4, wobei der Teilnehmer (SBS) die Verbindung durch Senden einer USSD-Nachricht über die Teilnehmerdatenbank (HLR) an die Anwendung (AP1) sendet.

9. Verfahren nach Anspruch 1, wobei die Identität der mobilen Station von der Zugriffsdatenbank (ACR) in Form von IMSI oder MSISDN durch Bezug auf die temporäre IP-Adresse für das mobile Endgerät beim Kauf geholt wird und Information über den Namen und die Adresse des Teilnehmers von der Datenbank (HLR, SCR, SBR) durch Bezug auf IMSI oder MSISDN geholt wird.

10. Verfahren nach Anspruch 1, wobei die Identität des mobilen Endgerätes (MS) IMSI oder MSISDN ist.

11. System zur Verwendung in einem Paketdatennetzwerk (CSN) und einem mobilen Funknetzwerk (GSM) zum Identifizieren eines Teilnehmers (SBS), der ein Warenstück oder einen Dienst anfordert, die mittels einer Anwendung (AP1) in einem bedienenden Computer (S1) angeboten werden, der mit dem Paketdatennetzwerk (CSN) verbunden ist,
wobei der Teilnehmer eine Subskription in dem mobilen Funknetzwerk (GSM) besitzt und ein mobiles Endgerät (MS) zum Zugriff auf das Paketdatennetzwerk (CSN) über das mobile Funknetzwerk (GSM) verwendet und eine Teilnehmerdatenbank (HLR, SCR, SBR) Teilnehmerinformationen umfasst, die mit der Identität des mobilen Endgerätes (MS) verbunden ist,
wobei das System umfasst:
eine Zugriffsdatenbank (ACR), die angepasst ist, die Identität des mobilen Endgerätes (MS) zusammen mit einer temporären IP-Adresse, die dem mobilen Endgerät (MS) zugewiesen ist, zu registrieren,
einer Vorrichtung in der Anwendung (AP1) zum Empfangen der temporären IP-Adresse zusammen mit der Waren- oder Dienstanfrage des Teilnehmers (SBS) in einer Sitzung mit dem mobilen Endgerät (MS), und
einer Vorrichtung zum Identifizieren des Teilnehmers durch Verwenden der temporären IP-Adresse, die durch die Anwendung (AP1) gegeben ist, um die Identität des mobilen Endgerätes von der Zugriffsdatenbank (ACR) zu erhalten.

12. System nach Anspruch 11, weiter mit einer Vorrichtung zum Erhalten der Teilnehmerinformation von der Teilnehmerdatenbank (HLR, SCR, SBR) durch Verwenden der Identität des mobilen Endgerätes.

13. System nach Anspruch 11, weiter mit einer Rechnungsdatenbank (BGW), die mit dem Paketdatennetzwerk (CSN) verbunden ist, und mit einer Vorrichtung zum auf Anordnung von der Anwendung (AP1) Registrieren eines Eintrags mit der Zahlungshöhe und der Identität des mobilen Endgerätes, um dem Teilnehmer (SBS) eine Rechnung zu stellen.

14. System nach Anspruch 11, wobei die Teilnehmerdatenbank (HLR, SCR, SBR) eine erste Kreditkartennummer umfasst, die der Identität des mobilen Endgerätes entspricht, und wobei das mobile Funknetzwerk (GSM) ebenso eine Vorrichtung zum auf Anfrage von der Anwendung (AP1-AP3) Geben der Identität des mobilen Endgerätes, zum Lesen einer zweiten Kreditkartennummer und zum Ausliefern einer Antwort in Abhängigkeit der Entsprechung zwischen der ersten und der zweiten Kreditkartennummer umfasst.

15. System nach einem der Ansprüche 11-14 wobei das mobile Funknetzwerk (GSM) mit dem Paketdatennetzwerk (CSN) über ein USSD-Gateway (USSD-GW) verbindet und Information zwischen der Anwendung (AP1) und dem mobilen Endgerät (MS) durch den Dienst USSD übertragen wird.

16. Zugriffsdatenbank (ACR) zur Verwendung zum Identifizieren eines Teilnehmers (SBS), der ein Warenstück oder einen Dienst anfordert, die mittels einer Anwendung (AP1) in einem bedienenden Computer (S1) angeboten werden, der mit einem Paketdatennetzwerk (CSN) verbunden ist,
wobei der Teilnehmer eine Subskription in einem mobilen Radionetzwerk (GSM) besitzt und ein mobiles Endgerät (MS) zum Zugriff auf das Paketdatennetzwerk (CSN) über das mobile Funknetzwerk (GSM) verwendet und eine Teilnehmerdatenbank (HLR, SCR, SBR) Teilnehmerinformationen enthält, die mit der Identität des mobilen Endgerätes (MS) verbunden ist,
wobei die Zugriffsdatenbank (ACR) angepasst ist, die Identität des mobilen Endgerätes (MS) zusammen mit einer temporären IP-Adresse, die dem mobilen Endgerät (MS) zugewiesen ist, zu registrieren, und
die Identität des mobilen Endgerätes (MS) der Anwendung als Antwort auf eine Anfrage von der Anwendung bereitzustellen, die sich auf die temporäre IP-Adresse, bezieht, wie von der Anwendung (AP1) zusammen mit der Waren- oder Dienstanfrage des Teilnehmers (SBS) in einer Sitzung mit dem mobilen Endgerät (MS) empfangen wird.

17. Zugriffsdatenbank (ACR) nach Anspruch 16, wobei die Zugriffsdatenbank (ACR) angepasst ist, die Identität des mobilen Endgerätes (MS) bereitzustellen, wenn die Anwendung (AP1) eine direkte Anfrage an die Zugriffsdatenbank (ACR) richtet, die sich auf die temporäre IP-Adresse bezieht.

18. Zugriffsdatenbank (ACR) nach Anspruch 16 oder 17, wobei die Identität des mobilen Endgerätes (MS) IMSI oder MSISDN ist.

19. Vorrichtung zum Laufenlassen einer Anwendung (AP1) zur Verwendung in einem bedienenden Computer (S1), der mit einem Paketdatennetzwerk (CSN) verbunden ist, wobei die Anwendung ein Warenstück oder einen Dienst einem anfragenden Teilnehmer (SBS) anbietet,
wobei der Teilnehmer eine Subskription in einem mobilen Funknetzwerk (GSM) besitzt und ein mobiles Endgerät (MS) zum Zugriff auf das Paketdatennetzwerk (CSN) über das mobile Funknetzwerk (GSM) verwendet und eine Teilnehmerdatenbank (HLR, CSR, SBR) Teilnehmerinformation umfasst, die mit der Identität des mobilen Endgerätes (MS) verbunden ist,
wobei die Vorrichtung zum Laufenlassen der Anwendung angepasst ist, eine temporäre IP-Adresse zu empfangen, die dem mobilen Endgerät (MS) zusammen mit der Waren- oder Dienstanfrage des Teilnehmers (SBS) in einer Sitzung mit dem mobilen Endgerät (MS) zugewiesen ist, und
um die Identität des mobilen Endgerätes (MS) von der Zugriffsdatenbank (ACR) durch Beziehen auf die temporäre IP-Adresse zu erhalten, wobei die zugriffsdatenbank (ACR) die Identität des mobilen Endgerätes zusammen mit der temporären IP-Adresse registriert hat.

20. Vorrichtung zum Laufenlassen einer Anwendung (AP1) nach Anspruch 19, wobei die Vorrichtung zum Laufenlassen einer Anwendung weiter angepasst ist, eine direkte Anfrage an die Zugriffsdatenbank (ACR) zu richten, die sich auf die temporäre IP-Adresse bezieht.

21. Vorrichtung zum Laufenlassen einer Anwendung (AP1) nach Anspruch 19 oder 20, wobei die Vorrichtung zum Laufenlassen einer Anwendung weiter angepasst ist, einen Rechnungseintrag (CDR), der die temporäre IP-Adresse und Information über die angeforderte Ware oder den Dienst umfasst, an eine Rechnungsdatenbank (BGW) zu senden.

22. Vorrichtung zum Laufenlassen einer Anwendung (AP1) nach einem der Ansprüche 19-21 wobei die Identität des mobilen Endgerätes (MS) IMSI oder MSISDN ist.

## Revendications

1. Procédé d'identification d'un abonné (SBS) demandant un élément de marchandises ou un service offert au moyen d'une application (AP1) dans un ordinateur serveur (S1) relié à un réseau de données à commutation de paquets (CSN),
dans lequel l'abonné a un abonnement à un réseau du service mobile (GSM) et utilise un terminal mobile (MS) pour accéder au réseau de données à commutation de paquets (CSN) par l'intermédiaire du réseau du service mobile (GSM), et dans lequel une base de données d'abonnés (HLR, SCR, SBR) contient des informations d'abonné liées à l'identité du terminal mobile (MS),
ledit procédé comprenant les étapes consistant à :
attribuer une adresse IP provisoire au terminal mobile (MS) et enregistrer l'identité du terminal mobile en même temps que ladite adresse IP provisoire dans une base de données d'accès (ACR),
le terminal mobile (MS) envoyant ladite adresse IP provisoire à l'application (AP1) en même temps que la demande de marchandise ou de service de l'abonné (SBS) dans une session entre le terminal mobile et l'application (AP1), et
identifier l'abonné en utilisant ladite adresse IP provisoire donnée par l'application (AP1) pour obtenir l'identité du terminal mobile à partir de la base de données d'accès (ACR).

2. Procédé selon la revendication 1, dans lequel lesdites informations d'abonné sont obtenues à partir de la base de données d'abonné (HLR, SCR, SBR).

3. Procédé selon la revendication 1 ou 2, dans lequel l'identité obtenue du terminal mobile est utilisée pour facturer l'abonné (SBS).

4. Procédé selon la revendication 3, dans lequel l'application (AP1) envoie une entrée de facturation (CDR), contenant ladite adresse IP provisoire et des informations concernant la marchandise ou le service demandé, à une base de données de facturation (BGW), et ladite entrée de facturation (CDR) est utilisée par un opérateur dudit système de service mobile (GSM) pour facturer l'abonné (SBS) et payer le vendeur de ladite marchandise ou dudit service.

5. Procédé selon la revendication 1, dans lequel l'application (AP1) interroge directement la base de données d'accès (ACR), en se référant à ladite adresse IP provisoire, et est informée de l'identité du terminal mobile (MS).

6. Procédé selon la revendication 3, dans lequel un premier numéro de carte de crédit a été enregistré dans ladite base de données d'abonnés (HLR, SCR, SBR), et l'abonné (SBS) donne un second numéro de carte de crédit à ladite application (AP1), après que, en se référant à ladite identité, ledit premier numéro de carte de crédit en provenance de ladite base de données d'abonnés (HLR, SCR, SBR) est lu, à la demande de ladite application, de sorte que l'achat est effectué lors de la correspondance entre lesdits premier et second numéros de carte de crédit.

7. Procédé selon l'une quelconque des revendications précédentes, dans lequel ledit terminal mobile (MS) est muni d'un navigateur www, et des informations entre le terminal mobile (MS) et ladite application (AP1) sont transférées selon un protocole Internet.

8. Procédé selon l'une quelconque des revendications 1 à 4, dans lequel l'abonné (SBS) demande ladite connexion en envoyant un MESSAGE USSD par l'intermédiaire de ladite base de données d'abonnés (HLR) à ladite application (AP1).

9. Procédé selon la revendication 1, dans lequel l'identité de la station mobile est amenée en provenance de la base de données d'accès (ACR) sous la forme d'un IMSI ou MSISDN en se référant à ladite adresse IP provisoire pour le terminal mobile au niveau de l'achat, et des informations concernant le nom et l'adresse de l'abonné sont amenées en provenance de la base de données d'abonnés (HLR, SCR, SBR) en se référant audit IMSI ou MSISDN.

10. Procédé selon la revendication 1, dans lequel l'identité du terminal mobile (MS) est IMSI ou MSISDN.

11. Système, à utiliser dans un réseau de données à commutation de paquets (CSN) et un réseau du service mobile (GSM), pour identifier un abonné (SBS) demandant un élément de marchandise ou un service offert au moyen d'une application (AP1) dans un ordinateur serveur (S1) relié audit réseau de données à commutation de paquets (CSN),
dans lequel l'abonné possède un abonnement dans ledit réseau du service mobile (GSM) et utilise un terminal mobile (MS) pour accéder au réseau de données à commutation de paquets (CSN) par l'intermédiaire du réseau du service mobile (GSM), et une base de données d'abonnés (HLR, SCR, SBR) contient des informations d'abonnés liées à l'identité du terminal mobile (MS),
ledit système comprenant :
une base de données d'accès (ACR) conçue pour enregistrer l'identité du terminal mobile (MS) en même temps qu'une adresse IP provisoire attribuée au terminal mobile (MS),
un moyen dans ladite application (AP1) pour recevoir ladite adresse IP provisoire en même temps que la demande de marchandise ou de service de l'abonné (SBS) dans une session avec le terminal mobile (MS), et
un moyen pour identifier l'abonné en utilisant ladite adresse IP provisoire donnée par l'application (AP1) pour obtenir l'identité du terminal mobile à partir de la base de données d'accès (ACR).

12. Système selon la revendication 11, comprenant de plus un moyen pour obtenir lesdites informations d'abonné à partir de la base de données d'abonnés (HLR, SCR, SBR) en utilisant l'identité du terminal mobile.

13. Système selon la revendication 11, comprenant de plus une base de données de facturation (BGW), reliée au réseau de données à commutation de paquets (CSN), et avec un moyen pour, lors d'un ordre en provenance de ladite application (AP1), enregistrer une entrée avec le montant pour le paiement et l'identité du terminal mobile, pour facturer ledit abonné (SBS).

14. Système selon la revendication 11, dans lequel ladite base de données d'abonnés (HLR, SCR, SBR) comprend un premier numéro de carte de crédit, qui correspond à l'identité du terminal mobile, et de sorte que le réseau du service mobile (GSM) comprend également un moyen pour, lors d'une interrogation provenant de ladite application (AP1 - AP3), donner l'identité du terminal mobile, lire un second numéro de carte de crédit et délivrer une réponse selon la correspondance entre lesdits premier et second numéros de carte de crédit.

15. Système selon l'une quelconque des revendications 11 à 14, dans lequel le réseau du service mobile (GSM) se connecte au réseau de données à commutation de paquets (CSN) par l'intermédiaire d'une passerelle USSD (USSD-GW) et les informations entre ladite application (AP1) et ledit terminal mobile (MS) sont transférées par le service USSD.

16. Base de données d'accès (ACR) à utiliser pour identifier un abonné (SBS) demandant un élément de marchandise ou un service offert au moyen d'une application (AP1) dans un ordinateur serveur (S1) relié à un réseau de données à commutation de paquets (CSN),
dans laquelle l'abonné possède un abonnement à un réseau du service mobile (GSM) et utilise un terminal mobile (MS) pour accéder au réseau de données à commutation de paquets (CSN) par l'intermédiaire du réseau du service mobile (GSM), et une base de données d'abonnés (HLR, SCR, SBR) contient des informations d'abonné liées à l'identité du terminal mobile (MS),
ladite base de données d'accès (ACR) étant conçue pour enregistrer l'identité du terminal mobile (MS) en même temps qu'une adresse IP provisoire attribuée au terminal mobile (MS), et
pour fournir l'identité du terminal mobile (MS) à ladite application en réponse à une interrogation provenant de l'application en se référant à ladite adresse IP provisoire lorsqu'elle est reçue par ladite application (AP1) en même temps que la demande de marchandise ou de service d'abonné (SBS) dans une session avec le terminal mobile (MS).

17. Base de données d'accès (ACR) selon la revendication 16, dans laquelle la base de données d'accès (ACR) est conçue pour fournir l'identité du terminal mobile (MS) lorsque l'application (AP1) interroge directement la base de données d'accès (ACR), en se référant à ladite adresse IP provisoire.

18. Base de données d'accès (ACR) selon la revendication 16 ou 17, dans laquelle l'identité du terminal mobile (MS) est IMSI ou MSISDN.

19. Moyen pour faire fonctionner une application (AP1) à utiliser dans un ordinateur serveur (S1) relié à un réseau de données à commutation de paquets (CSN), ladite application offrant un élément de marchandise ou un service à un abonné demandeur (SBS),
dans lequel l'abonné possède un abonnement à un réseau du service mobile (GSM) et utilise un terminal mobile (MS) pour accéder au réseau de données à commutation de paquets (CSN) par l'intermédiaire du réseau du service mobile (GSM), et une base de données d'abonnés (HLR, SCR, SBR) contient des informations d'abonné liées à l'identité du terminal mobile (MS),
ledit moyen d'exécution d'application étant conçu pour recevoir une adresse IP provisoire, attribuée au terminal mobile (MS), en même temps que la demande de marchandise ou de service de l'abonné (SBS) dans une session avec le terminal mobile (MS), et
pour obtenir l'identité du terminal mobile (MS) à partir d'une base de données d'accès (ACR) en se référant à ladite adresse IP provisoire, dans lequel la base de données d'accès (ACR) a enregistré l'identité du terminal mobile en même temps que ladite adresse IP provisoire.

20. Moyen pour faire fonctionner une application (AP1) selon la revendication 19, ledit moyen d'exécution d'application étant de plus conçu pour interroger directement la base de données d'accès (ACR) en se référant à ladite adresse IP provisoire.

21. Moyen pour faire fonctionner une application (AP1) selon la revendication 19 ou 20, ledit moyen d'exécution d'application étant, de plus, conçu pour envoyer une entrée de facturation (CDR), contenant ladite adresse IP provisoire et des informations concernant la marchandise ou le service demandé, à une base de données de facturation (BGW).

22. Moyen pour faire fonctionner une application (AP1) selon l'une quelconque des revendications 19 à 21, dans lequel l'identité du terminal mobile (MS) est IMSI ou MSISDN.
